# EUROPÄISCHE PATENTSCHRIFT

(11) **EP 2 523 268 B1**
(45) Veröffentlichungstag und Bekanntmachung des Hinweises auf die Patenterteilung: **20.12.2017**
(21) Anmeldenummer: 12002374.2
(22) Anmeldetag: 30.03.2012
(51) Int. Cl.: H01R 13/66, H01R 24/64, H04L 12/10

(54) **Stecker und System aus Stecker und Buchse**
Connector and system comprising connector and socket
Prise et système composé d'une prise et d'une douille

(30) Priorität: 01.04.2011 DE 102011015816
(43) Veröffentlichungstag der Anmeldung: 14.11.2012
(73) Patentinhaber: Yamaichi Electronics Deutschland GmbH, 85609 Aschheim-Dornach (DE)
(72) Erfinder: Quiter, Michael, 57482 Wenden (DE)
(74) Vertreter: Müller-Boré & Partner Patentanwälte PartG mbB

(56) Entgegenhaltungen:
- US-A1- 2003 194 912
- US-A1- 2010 159 750
- US-A1- 2011 053 428
- US-B1- 6 305 950
- US-B1- 6 447 326

## Beschreibung

Die vorliegende Erfindung betrifft einen Netzwerkstecker, insbesondere einen RJ 45 Stecker, sowie ein System aus Stecker und Buchse.

Netzwerkstecker, insbesondere RJ 45 Stecker (RJ = Registered Jack), werden in der heutigen Telekommunikationstechnik eingesetzt, um Daten zwischen Geräten, insbesondere Rechnern, mittels Netzwerk-Kabeln mit hohen Übertragungsgeschwindigkeiten zu übertragen. Die Leistungsfähigkeit des Netzwerksteckers hat hierbei einen entscheidenden Einfluss auf die Signalübertragung.

US 2011/0053428 A1 offenbart eine RJ45-Buchse mit einer Unter-Baugruppe, wobei die Unter-Baugruppe eine Leiterplatte umfasst, die am kabelseitigen Ende an der Unterseite acht Kontakte aufweist und am steckerseitigen Ende an der Oberseite acht Kontakte aufweist, wobei die Kontakte jeweils über Leiterbahnen miteinander verbunden sind. Ein Teil der Leiterbahnen kann zur Signalübertragung, ein anderer Teil zur Energieübertragung genutzt werden.

US 2003/0194912 A1 offenbart eine RJ45-Buchse mit acht Kontakten für einen Netzwerkstecker, wobei die steckerseitigen Kontakte und kabelseitigen Kontakte der Buchse jeweils über Leiterbahnen einer Leiterplatte miteinander verbunden sind. Über die Leiterbahnen können Signale und Energie übertragen werden.

US 2010/0159750 A1 offenbart einen Serial Advanced Technology Attachment (SATA) Verbinder, welcher neben signalübertragenden Kontakten außenliegend zwei separat vorgesehene energieübertragende Kontakte aufweist.

US 6 305 950 B1 offenbart einen Netzwerkstecker umfassend eine Leiterplatte, wobei die buchsenseitigen Kontakte und die kabelseitigen Kontakte jeweils über Leiterbahnen der Leiterplatte miteinander verbunden sind. Die Leiterbahnen sind sowohl auf der Oberseite als auch auf der Unterseite der Leiterplatte angeordnet, um gegenseitige Störeinflüsse zu vermeiden. Die kabelseitigen Kontakte sind als Schneidverbinder ausgeführt.

US 6 447 B1 offenbart einen Stecker, bei dem die buchsenseitigen Kontakte und die kabelseitigen Litzenkontakte jeweils über eine Leiterbahn einer Leiterplatte miteinander verbunden sind, wobei die kabelseitigen Litzenkontakte als Schneidverbinder ausgeführt sind.

Es ist daher Aufgabe der vorliegenden Erfindung, einen Stecker, insbesondere einen RJ 45 Stecker mit verbesserter Leistungsfähigkeit bereitzustellen.

Diese Aufgabe wird durch den Stecker sowie das System aus Stecker und Buchse mit den Merkmalen der unabhängigen Ansprüche gelöst. Bevorzugte Ausführungsformen ergeben sich aus den abhängigen Ansprüchen.

Gemäß einem Aspekt der Erfindung wird ein Stecker, insbesondere RJ 45 Stecker, bereitgestellt, umfassend:
- ein Gehäuse, welches einen buchsenseitigen Endbereich und einen kabelseitigen Endbereich aufweist, und
- eine Leiterplatte, welche in dem Gehäuse angeordnet ist, wobei
   -- die Leiterplatte in ihrem buchsenseitigen Endbereich eine Vielzahl von Buchsen-Kontakten für elektrisch leitenden Kontakt mit Kontaktelementen einer Buchse aufweist und wobei
   -- die Leiterplatte in ihrem kabelseitigen Endbereich eine Vielzahl von Litzen-Kontakten aufweist, welche als Schneidverbinder ausgeführt sind und welche mit einzelnen Litzen zumindest eines Verbindungskabels, insbesondere eines Netzwerk-Kabels, verbindbar sind, und
- Litzenaufnahmeelemente, wobei die Litzenaufnahmeelemente im Gehäuse angeordnet sind und Litzenaufnahmeöffnungen aufweisen, wobei einzelne Litzen des Verbindungskabels in die Litzenaufnahmeöffnungen einführbar sind, und wobei die Litzenaufnahmeelemente auf der Leiterplatte über die Schneidverbinder stülpbar sind, um die einzelnen Schneidverbinder mit den einzelnen Litzen des Verbindungskabels elektrisch leitend zu verbinden,
   wobei das Gehäuse weiter ein Litzenaufnahmeelement-Führungsteil aufweist,
   wobei die Litzenaufnahmeelemente derart konfiguriert sind, dass sie beim Drüberstülpen oder Aufsetzen entlang von Führungsschienen des Litzenaufnahmeelement-Führungsteils geführt werden, wobei Vorsprünge oder Schienen an Seitenflächen der Litzenaufnahmeelemente ausgebildet sind, welche in die Führungsnuten an inneren Seitenflächen des Litzenaufnahmeelement-Führungsteils eingeführt werden können,
   wobei die Buchsen-Kontakte signalübertragende Buchsen-Kontakte und energieübertragende Buchsen-Kontakte umfassen, und die Litzen-Kontakte signalübertragende Litzen-Kontakte und energieübertragende Litzen-Kontakte umfassen, und
      wobei jeder signalübertragende Buchsen-Kontakt mittels der Leiterplatte mit einem zugeordneten signalübertragenden Litzen-Kontakt elektrisch leitend verbunden ist.

Der buchsenseitige Endbereich ist hierbei der Endbereich des Gehäuses bzw. der Endbereich der Leiterplatte, der beim Einstecken des Steckers in eine Buchse vorne liegt. In anderen Worten wird beim Verbinden des Steckers mit der Buchse der buchsenseitige Endbereich des Gehäuses und der buchsenseitige Endbereich der Leiterplatte, somit auch der buchsenseitige Endbereich des Steckers, in die Buchse eingesteckt. Der kabelseitige Endbereich des Gehäuses bzw. der kabelseitige Endbereich der Leiterplatte ist der Endbereich des Gehäuses bzw. der Leiterplatte, der in Einsteck-Richtung dem buchsenseitigen Endbereich des Gehäuses bzw. der Leiterplatte gegenüber liegt. An seinem kabelseitigen Endbereich nimmt das Gehäuse das zumindest eine Verbindungskabel auf, und die Litzen des Verbindungskabels werden mit den Litzen-Kontakten am kabelseitigen Endbereich der Leiterplatte elektrisch leitend verbunden. Die Längsachsen des Steckers, des Gehäuses sowie der Leiterplatte verlaufen zwischen dem buchsenseitigen und kabelseitigen Endbereich des Steckers, des Gehäuses und der Leiterplatte und sind zueinander parallel. Die Längsachsen des Steckers, des Gehäuses und der Leiterplatte sind ebenso parallel zu der Einsteckrichtung.

Die Leiterplatte kann auch als PCB (printed circuit board) oder Platine bezeichnet werden. Bei dem zumindest einen Verbindungskabel kann es sich um ein Netzwerk-Kabel mit einer Vielzahl von Litzen, vorzugsweise mit 6, 7, 8, 9, 10 oder mehr Litzen, handeln. Die einzelnen Litzen des zumindest einen Verbindungskabels können die selbe Litzenstärke aufweisen oder verschiedene Litzenstärken aufweisen. Gängige Litzenstärken für signalübertragende Litzen betrgane zwischen etwa 0.08 mm bis 0.13 mm, insbesondere zwischen etwa 0.10 mm bis 0.12 mm. Gängige Litzenstärken für energieübertragende Litzen betragen zwischen etwa 0.08 mm bis 0.13 mm, zwischen etwa 0.10 mm bis 0.12 mm.

Es können auch Litzen von zwei oder mehr Verbindungskabeln mit den Litzen-Kontakten der Leiterplatte elektrisch leitend verbunden werden, wobei jeweils eine Litze einem Litzen-Kontakt zugeordnet sein kann. Insbesondere kann es sich bei einem Verbindungskabel um ein Netzwerk-Kabel handeln und bei einem zweiten Verbindungskabel um ein Stromkabel.

Der elektrisch leitende Kontakt der Buchsen-Kontakte mit den Kontaktelementen der Buchse kann dadurch hergestellt werden, dass die Buchsen-Kontakte mit den Kontaktelementen der Buchse mechanisch in Kontakt treten. Hierbei können einzelne Buchsen-Kontakte vorzugsweise mit einer Kraft von etwa 0.1 N bis 1 N , insbesondere von etwa 0.3 N bis 0.8 N gegen die Kontaktelemente der Buchse gepresst werden. Durch den elektrisch leitenden Kontakt können elektrische Ströme bzw. Spannungen sowie Signale als Resultat der Strom- bzw. Spannungsübertragung zwischen den Buchsen-Kontakten und den Kontaktelementen der Buchse übertragen werden.

Signalübertragende Buchsen-Kontakte und Litzen-Kontakte können ausgelegt sein, ausschließlich elektrische bzw. elektronische Signale zu übertragen. Statt "signalübertragend" können auch die Begriffe "informationsübertragend", "informationsführend" oder "datenübertragend" verwendet werden. Es werden zwar zur Signalübertragung elektrische Ströme über die signalübertragenden Buchsen-Kontakte und Litzen-Kontakte übertragen bzw. es liegen zwar Spannungen an den signalübertragenden Buchsen-Kontakten und Litzen-Kontakten an, vorzugsweise dienen diese jedoch ausschließlich der Signalübertragung. D.h. die signalübertragenden Buchsen-Kontakte und Litzen-Kontakte übertragen keine Energie zur Versorgung von Geräten. Beispielsweise können über die signalübertragenden Buchsen-Kontakte und Litzen-Kontakte Ströme von etwa 0.01 mA bis 1.0 mA insbesondere von etwa 0.1 mA bis 0.5 mA übertragen werden, bzw. können an den signalübertragenden Buchsen-Kontakten und Litzen-Kontakten Spannungen von etwa 1V bis etwa 15 V, insbesondere von etwa 5 V bis 10 V anliegen.

Energieübertragende Buchsen-Kontakte und Litzen-Kontakte können ausgelegt sein, ausschließlich Energie für die Energie-Versorgung von Geräten, beispielsweise Netzwerk-Geräten oder Rechnern, zu übertragen. Bei der Energie handelt es sich um elektrische Energie, so dass auch von "stromübertragenden", "stromführenden", "spannungsübertragenden" oder "spannungsführenden" Buchsen- und Litzen-Kontakten gesprochen werden kann. D.h. die energieübertragenden Buchsen-Kontakte und Litzen-Kontakte übertragen vorzugsweise keine Signale, Daten oder Informationen. Beispielsweise können über die energieübertragenden Buchsen-Kontakte und Litzen-Kontakte Ströme von etwa 1.5 A bis etwa 2.5 A, insbesondere etwa 2.1 A bei einer Temperatur von etwa -30°C bis etwa 90°C, bevorzugt etwa - 10°C bis etwa 80°C, weiter bevorzugt bis etwa 70° C, insbesondere bei etwa 70°C übertragen werden, bzw. können an den energieübertragenden Buchsen-Kontakten und Litzen-Kontakten Spannungen von etwa 30 V (DC) bis etwa 70 V (DC) bevorzugt 40 V (DC) bis etwa 60 V (DC), insbesondere von etwa 50 V (DC) bzw. von etwa 10 V (AC) bis etwa 50 V(AC), bevorzugt von etwa 20 V (AC) bis etwa 40 V (AC), insbesondere von etwa 35 V (AC) anliegen.

Jeder signalübertragende Buchsen-Kontakt kann über eine Leiterbahn der Leiterplatte mit einem zugeordneten signalübertragenden Litzen-Kontakt elektrisch leitend verbunden sein. Elektrisch leitend verbunden bedeutet hierbei, dass ein Signalaustausch zwischen Buchsen-Kontakt und Litzen-Kontakt möglich ist. Bei den Leiterbahnen der Leiterplatte kann es sich um geätzte Kanäle auf der Leiterplatte handeln. Die einzelnen Leiterbahnen der Leiterplatte sind vorzugsweise untereinander elektrisch isoliert.

Vorteilhafterweise kann durch den Stecker gemäß diesem Aspekt der Erfindung die Signalqualität des zu übertragenden Signals verbessert werden, und die Leistungsfähigkeit des Steckers verbessert werden. Dies wird zum einen durch die Trennung zwischen den signalübertragenden Kontakten und den energieübertragenden Kontakten erreicht, da so die jeweiligen Kontakte hinsichtlich ihrer Funktion optimal ausgelegt werden können. Darüber hinaus wird das zu übertragende Signal nicht durch die zu übertragende Versorgungsspannung bzw. durch den zu übertragenden Versorgungsstrom beeinflusst. Auch können die hohen Temperaturen bzw. die Wärme, die durch die Übertragung der Versorgungsenergie entstehen kann, gezielt von den signalübertragenden Kontakten und Leitern ferngehalten werden bzw. besser abgeführt werden. Ferner ist es durch die getrennten energieübertragenden Kontakte möglich, Geräte mit höheren Strömen bzw. Spannungen zu versorgen. Weiter wird durch das Vorsehen der Leiterplatte die Signalqualität verbessert, da die Leiterbahnen auf der Leiterplatte ausgelegt bzw. angeordnet werden können, um gegenseitige Störeinflüsse zwischen den Leiterbahnen zu minimieren. Dies ist möglich, da die Leiterbahnen auf der Leiterplatte genauer geführt werden können als Litzen.

Vorzugsweise kann jeder energieübertragende Buchsen-Kontakt mittels eines Verbindungsleiters mit einem zugeordneten energieübertragenden Litzen-Kontakt elektrisch leitend verbunden sein, wobei jeder Verbindungsleiter an der Oberfläche der Leiterplatte angeordnet sein kann.

Vorteilhafterweise kann ein Verbindungsleiter mit einem größeren Querschnitt als der Querschnitt einer Leiterbahn der Leiterplatte ausgeführt werden, so dass die elektrische Leitfähigkeit erhöht wird und höhere Ströme bzw. Spannungen übertragen werden können als über Leiterbahnen einer Leiterplatte. Beispielsweise kann der Verbindungsleiter eine Querschnittsfläche von zwischen etwa 0.1 mm² bis etwa 0.4 mm² bevorzugt zwischen etwa 0.15 mm² bis etwa 0.3 mm², besonders bevorzugt von etwa 0.25 mm² aufweisen, wogegen die Leiterbahnen eine Querschnittsfläche von etwa 0.0005 mm² bis etwa 0.002 mm², bevorzugt von etwa 0.0009 mm² bis etwa 0.0015 mm² besonders bevorzugt von etwa 0.001 mm² aufweisen können. Außerdem wird ermöglicht, dass die signalübertragenden Kontakte und die energieübertragenden Kontakte gesondert geerdet werden können, und/oder gesondert abgeschirmt werden können.

Beispielswiese kann der Verbindungsleiter einen im wesentlichen runden oder rechteckigen Querschnitt aufweisen. Besonders bevorzugt ist der Verbindungsleiter ein Draht bzw. drahtförmig.

Die Anordnung der Verbindungsleiter auf der Oberfläche der Leiterplatte vereinfacht die Montage des Steckers. Der Verbindungsleiter kann auf der Leiterplatte ohne eine dafür vorgesehene Vertiefung angeordnet sein. Insbesondere kann der Verbindungsleiter auf der Isolierschicht bzw. des Isolierlacks der Leiterplatte angeordnet sein. Die Verbindungsleiter können aber auch getrennt von der Leiterplatte angeordnet sein. Ebenfalls ist es denkbar, dass die energieübertragenden Buchsen-Kontakte über Leiterbahnen der Leiterplatte mit den energieübertragenden Litzen-Kontakten elektrisch leitend verbunden werden bzw. sind.

Vorzugsweise sind alle Litzen-Kontakte oder eine Teilmenge der Litzen-Kontakte auf einer Seite der Leitungsplatte angeordnet, auf der keine Leiterbahnen ausgebildet sind.

Leiterplatten weisen üblicherweise eine Oberfläche bzw. Seite auf, die bedruckt ist bzw. Leiterbahnen umfaßt. Die Litzen-Kontakte und ebenso die Buchsen-Kontakte können jedoch auf der Oberfläche bzw. Seite der Leiterplatte angeordnet sein, die nicht bedruckt ist bzw. die keine Leiterbahnen aufweist. In diesem Fall durchdringen die Litzen-Kontakte bzw. die Buchsen-Kontakte die Leiterplatte, um mit den Leiterbahnen bzw. den Verbindungsleitern auf der anderen Seite elektrisch leitend verbunden zu werden bzw. elektrisch verbunden zu sein. Das elektrisch leitende Verbinden kann durch Löten geschehen. Vorteilhafterweise kann durch das Anordnen von Litzen-Kontakten bzw. Buchsen-Kontakten auf einer Seite der Leiterplatte, auf der keine Leiterbahnen ausgebildet sind, der Raum innerhalb des Steckers bzw. des Gehäuses besser ausgenutzt werden, da auf beiden Oberflächen der Leiterplatte Litzen-Kontakte bzw. Buchsen-Kontakte angeordnet werden können.

Vorzugsweise weist eine Seite (Unterseite) der Leiterplatte acht signalübertragende Buchsen-Kontakte auf. Weiter vorzugsweise weist die andere Seite (Oberseite) der Leiterplatte zwei energieübertragende Buchsen-Kontakte auf.

Durch die Anordnung von acht signalübertragenden Buchsen-Kontakten auf der Unterseite der Leiterplatte, und somit auch auf der Unterseite des vorderen Endbereichs des Steckers, kann der Stecker eine Buchsen-Kontakt Anordnung eines standardisierten RJ 45 Netzwerksteckers aufweisen. Durch die Anordnung von zwei energieübertragenden Buchsen-Kontakten auf der Oberseite der Leiterplatte, und somit auch auf der Oberseite des vorderen Endbereichs des Steckers, kann der Stecker zusätzlich zwei energieübertragende Kontakte zur Energieversorgung bereitstellen, ohne die standardisierte Ausgestaltung eines RJ 45 Netzwerksteckers wesentlich zu verändern, nämlich mit acht signalübertragenden Buchsen-Kontakten auf der Unterseite und mit zwei energieübertragenden Buchsen-Kontakten auf der Oberseite des Steckers.

Die Oberseite und die Unterseite der Leiterplatte deuten auf die zwei Oberflächen der Leiterplatte, wobei eine Oberfläche oder beide Oberflächen Leiterbahnen aufweisen können. Die Unterscheidung zwischen Oberseite und Unterseite ist vordefiniert und dient der Zuordnung der beiden Oberflächen der Leiterplatte.

Vorzugsweise sind die energieübertragenden Buchsen-Kontakte in Richtung der Breitenachse der Leiterplatte relativ zu den signalübertragenden Buchsen-Kontakten außenliegend angeordnet.

Die Richtung der Breitenachse der Leiterplatte ist hierbei die Richtung, in die sich die Leiterplatte in der Breite erstreckt, das heißt quer zur Längsachse der Leiterplatte. Die Breitenachse kann auch als Querachse bezeichnet werden. In anderen Worten sind die signalübertragenden Buchsen-Kontakte zwischen den außenliegenden, energieübertragenden Buchsen-Kontakten auf der Leiterplatte angeordnet. Vorteilhafterweise ermöglicht diese Anordnung, dass die Verbindungsleiter, welche die energieübertragenden Litzen-Kontakte mit den energieübertragenden Buchsen-Kontakten elektrisch leitend verbinden, in Richtung der Breitenachse der Leiterplatte am äußeren Rand der Leiterplatte entlang geführt werden können, was Störeinflüsse auf die signalübertragenden Leiterbahnen der Leiterplatte minimiert.

Vorzugsweise ist eine Teilmenge der Litzen-Kontakte an der Oberseite der Leiterplatte angeordnet, und die verbleibende Teilmenge der Litzen-Kontakte ist an der Unterseite der Leiterplatte angeordnet.

Es ist möglich, dass die Hälfte der Litzen-Kontakte auf der Oberseite der Leiterplatte angeordnet ist, und die andere Hälfte der Litzen-Kontakte auf der Unterseite der Leiterplatte angeordnet ist. Ebenso ist ein anderes Verhältnis möglich. Es ist auch denkbar, das alle Litzen-Kontakte auf einer Seite der Leiterplatte, der Oberseite oder der Unterseite, angeordnet sind.

Vorteilhafterweise kann durch die Anordnung der Litzen-Kontakte auf der Oberseite und der Unterseite der Leiterplatte der Raum innerhalb des Gehäuses gut ausgenutzt werden. Ferner wird durch die Verteilung der Litzen-Kontakte die Zugänglichkeit der Litzen zu den Litzen-Kontakten verbessert.

Vorzugsweise sind an der Oberseite der Leiterplatte fünf Litzen-Kontakte angeordnet und an der Unterseite der Leiterplatte fünf Litzen-Kontakte angeordnet.

Vorteilhafterweise kann durch die Anordnung der jeweils fünf Litzen-Kontakte auf der Oberseite und der Unterseite der Leiterplatte der Raum innerhalb des Gehäuses gut ausgenutzt werden. Ferner wird die Zugänglichkeit der Litzen zu den Litzen-Kontakten verbessert. Durch die insgesamt zehn Litzen-Kontakte können beispielsweise acht signalübertragende Litzen eines standardisierten Netzwerk-Kabels sowie zusätzlich zwei energieübertragende Litzen jeweils mit den Litzen-Kontakten elektrisch leitend verbunden werden.

Die Litzen-Kontakte sind als Schneidverbinder ausgeführt.

Die Schneidverbinder können hierbei beispielsweise eine Y-förmige Gestalt aufweisen mit einem Pinbereich und zwei am Pinbereich angeordneten und sich vom Pinbereich erstreckenden Schneidschenkeln. Die Schneidschenkel können abschnittsweise parallel zueinander angeordnet sein und in einem Öffnungsbereich enden in dem sich der Abstand zwischen den Innenseiten der Schneidschenkel aufweitet. Der Abstand zwischen den Schneidschenkeln in dem Bereich, in dem die Schenkel parallel verlaufen, kann etwas kleiner sein, als der Durchmesser eines Leiters einer zu konnektierenden Litze. Konnektieren bedeutet hierbei, elektrisch leitend zu verbinden. Ein Schneidschenkel oder beide Schneidschenkel können einen Schneidenbereich aufweisen, der z.B. klingenartig gestaltet sein kann, sodass mit dem oder den Schneidschenkel(n) eine Isolierhülle der Litze durchschnitten und der Leiter der Litze in elektrisch leitenden Kontakt mit dem oder den Schneidschenkeln gebracht werden kann. Der Leiter kann zwischen den Schneidschenkeln eingeklemmt und so in Kontakt mit dem oder den Schneidschenkel(n) gehalten werden. Je nach Durchmesser der Litzen bzw. der Leiter der Litzen, können die Größen bzw. die Ausgestaltung der zugeordneten Schneidverbinder angepasst sein. So können beispielsweise sowohl signalübertragende Litzen als auch energieübertragende Litzen sicher mit den Schneidverbindern der zugeordneten signalübertragenden bzw. energieübertragenden Litzen-Kontakte elektrisch leitend verbunden werden.

Das Vorsehen von Schneidverbindern vereinfacht die Montage des Steckers, da ein Freilegen der Leiter der Litzen entfallen kann.

Der Stecker umfasst:
Litzenaufnahmeelemente, wobei die Litzenaufnahmeelemente in dem Gehäuse angeordnet sind und Litzenaufnahmeöffnungen aufweisen, wobei einzelne Litzen des Verbindungskabels in die Litzenaufnahmeöffnungen einführbar sind, und wobei die Litzenaufnahmeelemente auf der Leiterplatte über die Schneidverbinder stülpbar sind, um die einzelnen Schneidverbinder mit den einzelnen Litzen des Verbindungskabels elektrisch leitend zu verbinden.

Durch das Vorsehen von Litzenaufnahmeelementen kann die Montage des Steckers stark vereinfacht werden. Vorzugsweise weist der Stecker zwei Litzenaufnahmeelemente auf, wobei ein Litzenaufnahmeelement auf der Oberseite der Leiterplatte über die Schneidverbinder stülpbar ist, und das andere Litzenaufnahmeelement auf der Unterseite der Leiterplatte über die Schneidverbinder stülpbar ist. Hierbei werden die einzelnen Litzen, die in die Litzenaufnahmeöffnungen eingeführt sind, durch die Litzenaufnahmeelemente in Position gehalten, sodass beim Drüberstülpen der Litzenaufnahmeelemente über die Schneidverbinder die einzelnen Litzen automatisch mit den zugeordneten Schneidverbindern der Litzen-Kontakte elektrisch leitend verbunden werden.

Vorzugsweise sind die Leiterbahnen der Leiterplatte im wesentlichen nicht parallel zueinander ausgestaltet, um gegenseitige Störeinflüsse zu minimieren.

Die einzelnen Leiterbahnen der Leiterplatte können beispielsweise mit einem vorgegebenen Winkel zueinander bzw. schräg zueinander angeordnet sein. Die Leiterbahnen können sich auch überkreuzen, wobei die Leiterbahnen zumindest in dem Überkreuzenden Bereich zueinander isoliert sind, und/oder es können parallel Verlaufende Abschnitte der Leiterbahnen mit größtmöglichem Abstand zueinander angeordnet sein.

Vorteilhafterweise werden dadurch, dass die Leiterbahnen der Leiterplatte im wesentlichen nicht parallel zueinander verlaufen, gegenseitige Störeinflüsse der Leiterbahnen untereinander minimiert, was zu einer verbesserten Signalqualität und somit zu einer verbesserten Leistungsfähigkeit des Steckers führt. Insbesondere kann die Leiterplatte für eine verbesserte Signalqualität optimiert ausgelegt und gefertigt werden.

Gemäß einem weiteren Aspekt der Erfindung wird ein System aus Stecker und

Buchse bereitgestellt, umfassend:
einen erfindungsgemäßen Stecker, und
eine Buchse,
wobei die Buchse ein Gehäuse mit einer Stecker-Aufnahmevertiefung aufweist und in der Stecker-Aufnahmevertiefung eine Vielzahl von Kontaktelementen angeordnet ist, wobei die Kontaktelemente signalübertragende Kontaktelemente und energieübertragende Kontaktelemente umfassen, und
wobei in einem eingesteckten Zustand jeder signalübertragende Buchsen-Kontakt des Steckers mit einem zugeordneten signalübertragenden Kontaktelement der Buchse elektrisch leitend verbunden ist, und jeder energieübertragende Buchsen-Kontakt des Steckers mit einem zugeordneten energieübertragenden Kontaktelement der Buchse elektrisch leitend verbunden ist.

Die Stecker-Aufnahmevertiefung ist der Ausgestaltung des Steckers angepasst und weist vorzugsweise eine Einrastung auf, um den Stecker sicher im eingesteckten Zustand zu halten. Die elektrisch leitende Verbindung der Buchsen-Kontakte mit den Kontaktelementen der Buchse kann dadurch hergestellt werden, dass die Buchsen-Kontakte mit den Kontaktelementen der Buchse mechanisch in Kontakt treten. Hierbei können einzelne Buchsen-Kontakte vorzugsweise mit einer Kraft von etwa 0.1 N bis 1 N , insbesondere von etwa 0.3 N bis 0.8 N gegen die Kontaktelemente der Buchse gepresst werden. Durch den elektrisch leitenden Kontakt können elektrische Ströme oder Spannungen sowie Signale zwischen den Buchsen-Kontakten und den Kontaktelementen der Buchse übertragen werden.

Vorteilhafterweise wird durch das System gemäß diesem Aspekt der Erfindung ermöglicht, dass mittels eines Verbindungskabels zwischen zwei Geräten neben Signalen auch Versorgungsenergie übertragen werden kann. So kann beispielsweise eine separate Energieversorgung für eines der Geräte entfallen.

Die Erfindung ist nicht auf die oben genannten Aspekte und Auführungsformen beschränkt. Vielmehr können einzelne Merkmale der oben genannten Aspekt und Ausführungsformen losgelöst voneinander zu weiteren Aspekten und

Ausführungsformen kombiniert werden.

Im Folgenden wird die Erfindung anhand der Figuren näher beschrieben.

### Es zeigen:

- Fig. 1: eine Explosionsansicht des erfindungsgemäßen Steckers;
- Fig. 2: eine Schrägansicht des erfindungsgemäßen Steckers im aufgeklappten Zustand; und
- Fig. 3: eine Schrägansicht des erfindungsgemäßen Steckers im fertig montierten Zustand.

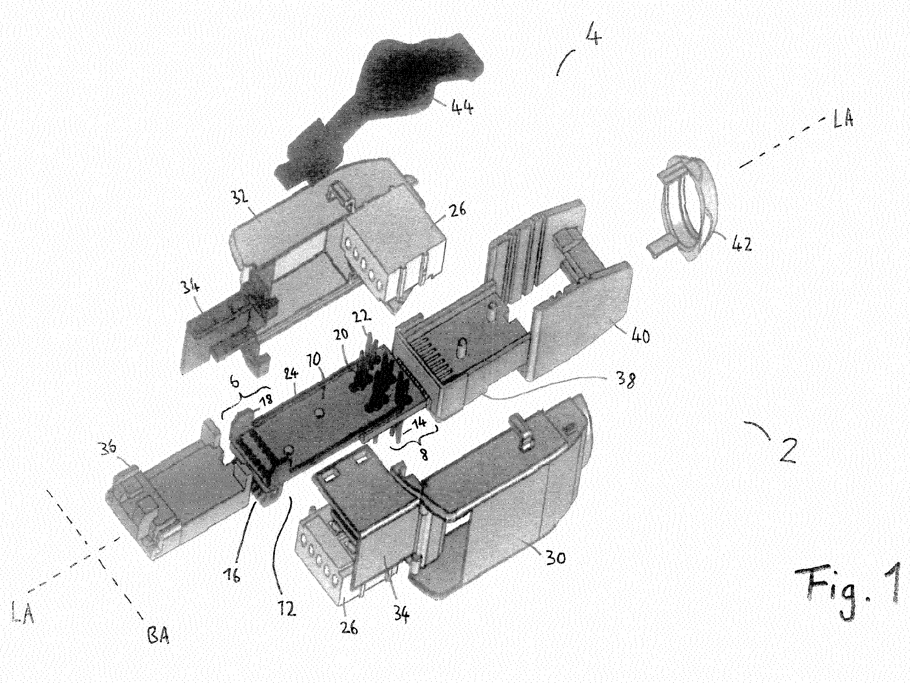

Fig. 1 zeigt eine Explosionsansicht des Steckers gemäß der vorliegenden Erfindung. Der Stecker 2 kann die Leiterplatte 10, das Gehäuse 4 und die zwei Litzenaufnahmeelemente 26 umfassen. Die Längsachse des Steckers bzw. der Leiterplatte ist mit LA, die Breitenachse des Steckers bzw. der Leiterplatte mit BA angedeutet. Die Leiterplatte ist flach und plattenartig ausgebildet und weist zwei größere Oberflächen bzw. Seiten auf. Die Längsachse LA ist parallel zu der Einsteckrichtung des Steckers. Die Breitenachse BA liegt quer zu der Längsachse LA in der Ebene, in der sich die Leiterplatte 10 erstreckt. Auf der Leiterplatte 10 können sowohl auf der Oberseite als auch auf der Unterseite jeweils fünf Schneidverbinder 14 als Litzen-Kontakte 14 am kabelseitigen Endbereich (8) der Leiterplatte 10 angeordnet sein. Am buchsenseitigen Endbereich (6) der Leiterplatte können auf der Oberseite der Leiterplatte in Richtung der Breitenachse BA außenliegend zwei energieübertragende Buchsen-Kontakte 18 angeordnet sein. Hierbei sind Ober- und Unterseite der Leiterplatte vordefinert. In Fig. 1 zeigt die Oberseite, wie sie in der Beschreibung und in den Ansprüchen definiert ist, nach oben. Die zwei energieübertragenden Buchsen-Kontakte 18 können über die zwei Verbindungsleiter 24 mit den zwei außenliegenden Schneidverbindern auf der Oberseite der Leiterplatte 10, also mit den zwei energieübertragenden Litzen-Kontakten 22, elektrisch leitend verbunden sein. Die auf der Unterseite der Leiterplatte 10 angeordneten signalübertragenden Buchsen-Kontakte 16 können jeweils mit den verbleibenden signalübertragenden Litzen-Kontakten (Schneidverbindern) 20 elektrisch leitend verbunden sein. Die Leiterplatte kann glasfaserverstärktes Epoxidharz, insbesondere FR4, umfassen, wobei die Leiterbahnen aus Kupfer ausgestaltet sind, die Buchsen-Kontakte, die Litzen-Kontakte und die Verbindungsleiter können ebenfalls Kupfer umfassen.

Das Gehäuse 4 des Steckers 2 kann eine erste Gehäusehälfte 30 und eine zweite Gehäusehälfte 32 umfassen. Im zusammengebauten Zustand können die erste Gehäusehälfte 30 und die zweite Gehäusehälfte 32 den Hauptteil des Gehäuses 4 bilden, wobei die beiden Gehäusehälften entlang der Längsachse LA und senkrecht zur Oberfläche der Leiterplatte10 zusammengefügt bzw. aneinandergelegt werden können. In anderen Worten ist das Hauptteil des Gehäuses entlang der Längsachse LA und senkrecht zur Oberfläche der Leiterplatte 10 in die zwei Gehäusehälften 30, 32 getrennt. An ihren buchsenseitigen Enden können beide Gehäusehälften 30, 32 mit Verbindungselementen 34, 34 drehbar verbunden sein. Die Verbindungselemente 34, 34 können miteinander verrastet werden, sodass beide Gehäusehälften 30, 32 über die Verbindungselemente 34, 34 verbunden sein können. Die Gehäusehälften 30, 32 können so in der Ebene, die durch die Längsachse bzw. Längsrichtung LA und der Breitenachse BA des Steckers bzw. der Leiterplatte aufgespannt wird, drehbar bzw. schwenkbar gelagert sein. In dem Zustand, in dem beide Gehäusehälften 30, 32 über die Verbindungselemente 34, 34 verbunden sind, können die beiden Gehäusehälften einen zusammengeklappten Zustand und einen aufgeklappten Zustand einnehmen, wobei im aufgeklappten Zustand die beiden Gehäusehälften 30, 32 einen Winkel von bis zu 180° einschließen können. Im aufgeklappten Zustand kann so die Zugänglichkeit zu der Leiterplatte 10 verbessert werden und somit die Montage des Steckers 2 vereinfacht werden. Im buchsenseitigen Endbereich kann das Gehäuse weiter ein oberes Stecker-Vorderteil 36 und ein unteres Stecker-Vorderteil 38 aufweisen. Diese können senkrecht zur Oberfläche der Leiterplatte 10 über die Buchsen-Kontakte 12 gestülpt werden und ergeben zusammen das Vorderteil des Steckers 2, das in die Buchse eingeführt werden kann. Das obere Stecker-Vorderteil 36 kann hierbei die zwei energieübertragenden Buchsen-Kontakte 18 von der Umgebung isolieren, wobei nur jeweils ein Bereich für den Zugang zu den energieübertragenden Kontaktelementen der Buchse (nicht gezeigt) freigelegt sein kann. Das untere Stecker-Vorderteil 38 kann die acht signalübertragenden Buchsen-Kontakte 16 von der Umgebung isolieren, wobei nur jeweils ein Bereich für den Zugang zu den signalübertragenden Kontaktelementen der Buchse (nicht gezeigt) freigelegt sein kann. Das Gehäuse 4 umfasst weiter ein Litzenaufnahmeelement-Führungsteil 40, sowie ein Kabel-Halteelement 42 und eine Schnalle 44. Die erste und zweite Gehäusehälfte 30, 32 kann Kunststoffmaterial, insbesondere PB7, PA6 oder LCP, umfassen. Das obere Stecker-Vorderteil 36 kann Kunststoffmaterial, insbesondere PB7, PA6 oder LCP, umfassen. Das untere Stecker-Vorderteil 38 kann Kunststoffmaterial, insbesondere PB7, PA6 oder LCP, umfassen. Das Litzenaufnahmeelement-Führungsteil 40 kann Kunststoffmaterial, insbesondere PB7, PA6 oder LCP, umfassen. Das Kabel-Halteelement 42 kann Kunststoffmaterial, insbesondere PB7, PA6 oder LCP, umfassen. Die Schnalle 44 kann Kunststoffmaterial, insbesondere PB7, PA6 oder LCP, umfassen.

Vom Gehäuse 4 umschlossen ist auf der Oberseite der Leiterplatte 10 ein Litzenaufnahmeelement 26 angeordnet und auf der Unterseite der Leiterplatte 10 ist ein Litzenaufnahmeelement 26 angeordnet, wobei jeweils ein Litzenaufnahmeelement 26 auf der Ober- und Unterseite der Leiterplatte 10 über die Schneidverbinder 14 gestülpt ist. Hierbei werden die einzelnen Litzen (nicht gezeigt), die in die Litzenaufnahmeöffnungen 28 eingeführt werden, durch die Litzenaufnahmeelemente 26 in Position gehalten, sodass beim Drüberstülpen bzw. Aufsetzen der Litzenaufnahmeelemente 26 über die Schneidverbinder 14 die einzelnen Litzen gleichzeitig in einem Arbeitsschritt mit den zugeordneten Schneidverbindern 14 der Litzen-Kontakte 14 elektrisch leitend verbunden werden. Hierzu können auf der der Leiterplatte zugewandten Seite der Litzenaufnahmeelemente 26 Schlitze ausgebildet sein, wobei die Schneidverbinder 14 in die Schlitze eingeführt werden können. Beim Drüberstülpen bzw. Aufsetzen werden die Litzenaufnahmeelemente 26 entlang der Führungsnuten des Litzenaufnahmeelement-Führungsteils 40 geführt. Hierzu sind Vorsprünge oder Schienen an den Seitenflächen der Litzenaufnahmeelemente 26 ausgebildet, welche in die Führungsnuten an den inneren Seitenflächen des Litzenaufnahmeelement-Führungsteils 40 eingeführt werden können.

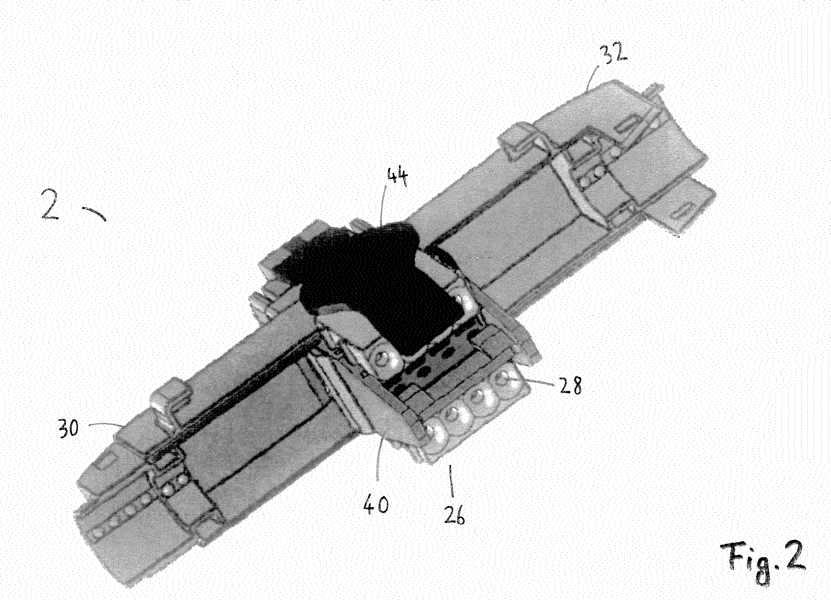

Fig. 2 zeigt den erfindungsgemäßen Stecker im teilweise zusammengebauten Zustand, wobei die beiden Gehäusehälften 30, 32 um 180° aufgeklappt sind. In diesem Zustand sind bereits das obere und das untere Stecker-Vorderteil 36, 38 auf der Leiterplatte 10 montiert, die Verbindungselemente 34 der Gehäusehälften 30, 32 sind verrastet, und das Litzenaufnahmeelement-Führungsteil 40 ist in seiner vorgegebenen Position zwischen den zwei Gehäusehälften 30, 32 angeordnet. Des Weiteren sind in diesem Zustand bereits die einzelnen freigelegten Litzen des Verbindungskabels 46 (nicht gezeigt) in die Litzenaufnahmeöffnungen 28 eingeführt, und die Litzenaufnahmeelemente 26 wurden entlang der Führungsnuten des Litzenaufnahmeelement-Führungsteils 40 auf die Leiterplatte 10 über die Litzen-Kontakte (Schneidverbinder) 14 gestülpt, sodass die einzelnen Litzen des Verbindungskabels 46 mit den Litzen-Kontakten (Schneidverbindern) 14 elektrisch leitend verbunden sind. Auch die Schnalle 44 ist in der vorgegebenen Position an der Unterseite des Steckers 2 angeordnet.

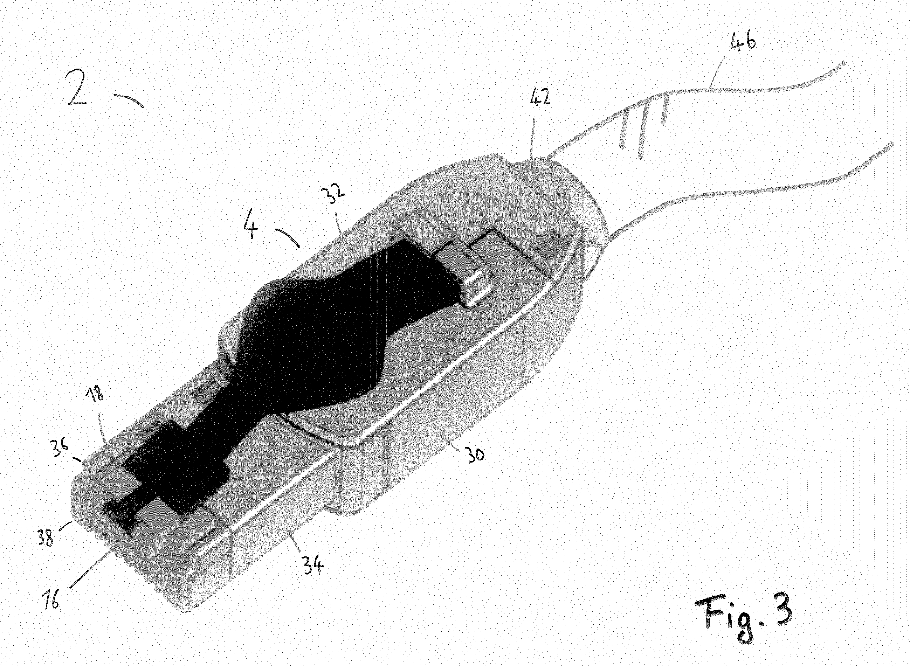

Fig. 3 zeigt den erfindungsgemäßen Stecker im fertig montierten Zustand. Um zu diesem Zustand zu gelangen, können die zwei Gehäusehälften 30, 32 des in Fig. 2 gezeigten aufgeklappten Steckers 2 zusammengeklappt werden, wobei die zwei Gehäusehälften 30, 32 die Litzen und das Verbindungskabel 46 einschließen. Als Letztes kann das Kabel-Halteelement 42 am kabelseitigen Endbereich 8 des Steckers 2 angeordnet werden. Das Kabel-Halteelement 42 kann neben der Fixierung des Verbindungskabels 46 die Funktion erfüllen, ein Aufklappen der zwei Gehäusehälften 30, 32 zu verhindern.

### Bezugszeichenliste

- 2: Stecker
- 4: Gehäuse
- 6: buchsenseitiger Endbereich der Leiterplatte
- 8: kabelseitiger Endbereich der Leiterplatte
- 10: Leiterplatte
- 12: Buchsen-Kontakte
- 14: Litzen-Kontakte
- 16: signalübertragende Buchsen-Kontakte
- 18: energieübertragende Buchsen-Kontakte
- 20: signalübertragende Litzen-Kontakte
- 22: energieübertragende Litzen-Kontakte
- 24: Verbindungsleiter
- 26: Litzenaufnahmeelemente
- 28: Litzenaufnahmeöffnungen
- 30: erste Gehäusehälfte
- 32: zweite Gehäusehälfte
- LA: Längsachse
- 34: Verbindungselement
- BA: Breitenachse
- 36: oberes Stecker-Vorderteil
- 38: unteres Stecker-Vorderteil
- 40: Litzenaufnahmeelement-Führungsteil
- 42: Kabel-Halteelement
- 44: Schnalle
- 46: Verbindungskabel

## Patentansprüche

1. Stecker (2), insbesondere RJ 45 Stecker (2), umfassend:
- ein Gehäuse (4), welches einen buchsenseitigen Endbereich (6) und einen kabelseitigen Endbereich (8) aufweist,
- eine Leiterplatte (10), welche in dem Gehäuse (4) angeordnet ist, wobei
-- die Leiterplatte (10) in ihrem buchsenseitigen Endbereich (6) eine Vielzahl von Buchsen-Kontakten (12) für elektrisch leitenden Kontakt mit Kontaktelementen einer Buchse aufweist und wobei
-- die Leiterplatte (10) in ihrem kabelseitigen Endbereich (8) eine Vielzahl von Litzen-Kontakten (14) aufweist, welche als Schneidverbinder (14) ausgeführt sind und welche mit einzelnen Litzen zumindest eines Verbindungskabels (46), insbesondere eines Netzwerk-Kabels, verbindbar sind, und
- Litzenaufnahmeelemente (26), wobei die Litzenaufnahmeelemente (26) im Gehäuse (4) angeordnet sind und Litzenaufnahmeöffnungen (28) aufweisen, wobei einzelne Litzen des Verbindungskabels (46) in die Litzenaufnahmeöffnungen (28) einführbar sind, und wobei die Litzenaufnahmeelemente (26) auf der Leiterplatte (10) über die Schneidverbinder (14) stülpbar sind, um die einzelnen Schneidverbinder (14) mit den einzelnen Litzen des Verbindungskabels elektrisch leitend zu verbinden,
wobei die Buchsen-Kontakte (12) signalübertragende Buchsen-Kontakte (16) und energieübertragende Buchsen-Kontakte (18) umfassen, und die Litzen-Kontakte (14) signalübertragende Litzen-Kontakte (20) und energieübertragende Litzen-Kontakte (22) umfassen, und
wobei jeder signalübertragende Buchsen-Kontakt (16) mittels der Leiterplatte (10) mit einem zugeordneten signalübertragenden Litzen-Kontakt (20) elektrisch leitend verbunden ist,
**dadurch gekennzeichnet, dass** das Gehäuse (4) weiter ein Litzenaufnahmeelement-Führungsteil (40) aufweist, wobei die Litzenaufnahmeelemente (26) derart konfiguriert sind, dass sie beim Drüberstülpen oder Aufsetzen entlang von Führungsnuten des Litzenaufnahmeelement-Führungsteils (40) geführt werden, wobei Vorsprünge oder Schienen an Seitenflächen der Litzenaufnahmeelemente (26) ausgebildet sind, welche in die Führungsnuten an inneren Seitenflächen des Litzenaufnahmeelement-Führungsteils (40) eingeführt werden können.

2. Stecker (2) nach Anspruch 1, wobei jeder energieübertragende Buchsen-Kontakt (18) mittels eines Verbindungsleiters (24) mit einem zugeordneten energieübertragenden Litzen-Kontakt (22) elektrisch leitend verbunden ist, wobei jeder Verbindungsleiter (24) an einer Oberfläche der Leiterplatte (10) angeordnet ist.

3. Stecker (2) nach Anspruch 1 oder 2, wobei alle Litzen-Kontakte (14) oder eine Teilmenge der Litzen-Kontakte (14) auf einer Seite der Leitungsplatte angeordnet sind oder ist, auf der keine Leiterbahnen ausgebildet sind.

4. Stecker (2) nach einem der vorangehenden Ansprüche, wobei die Unterseite der Leiterplatte (10) acht signalübertragende Buchsen-Kontakte (16) aufweist und/oder die Oberseite der Leiterplatte (10) zwei energieübertragende Buchsen-Kontakte (18) aufweist.

5. Stecker (2) nach einem der vorangehenden Ansprüche, wobei die energieübertragenden Buchsen-Kontakte (18) in Richtung der Breitenachse (BA) der Leiterplatte (10) relativ zu den signalübertragenden Buchsen-Kontakten (16) außenliegend angeordnet sind

6. Stecker (2) nach einem der vorangehenden Ansprüche, wobei an der Unterseite der Leiterplatte (10) fünf Litzen-Kontakte (14) angeordnet sind und an der Oberseite der Leiterplatte (10) fünf Litzen-Kontakte (14) angeordnet sind.

7. Stecker (2) nach einem der vorangehenden Ansprüche,
wobei die Leiterbahnen der Leiterplatte (10) im wesentlichen nicht parallel zueinander ausgestaltet sind, um gegenseitige Störeinflüsse zu minimieren.

8. System aus Stecker (2) und Buchse, umfassend:
einen Stecker (2) nach einem der vorangehenden Ansprüche, und
eine Buchse,
wobei die Buchse ein Gehäuse (4) mit einer Stecker-Aufnahmevertiefung aufweist und in der Stecker-Aufnahmevertiefung eine Vielzahl von Kontaktelementen angeordnet ist, wobei die Kontaktelemente signalübertragende Kontaktelemente und energieübertragende Kontaktelemente umfassen, und
wobei im eingesteckten Zustand jeder signalübertragende Buchsen-Kontakt (16) des Steckers (2) mit einem zugeordneten signalübertragenden Kontaktelement der Buchse elektrisch leitend verbunden ist, und jeder energieübertragende Buchsen-Kontakt (18) des Steckers (2) mit einem zugeordneten energieübertragenden Kontaktelement der Buchse elektrisch leitend verbunden ist.

## Claims

1. A connector (2), in particular an RJ 45 connector (2), comprising:
- a housing (4) which has a socket-side end region (6) and a cable-side end region (8),
- a printed circuit board (10) which is arranged in the housing (4), wherein
-- the printed circuit board (10) has a plurality of socket contacts (12) for electrically conductive contact with contact elements of a socket in its socket-side end region (6), and wherein
-- the printed circuit board (10) has a plurality of stranded wire contacts (14) in its cable-side end region (8), said stranded wire contacts being designed as insulation piercing connectors (14) and which can be connected to individual strands of at least one connector cable (46), in particular of a network cable, and
- stranded wire receiving elements (26), wherein the stranded wire receiving elements (26) are arranged in the housing (4) and have stranded wire receiving openings (28), wherein individual strands of the connector cable (46) can be inserted into the stranded wire receiving openings (28) and wherein the stranded wire receiving elements (26) on the printed circuit board (10) can be pulled over the insulation piercing connectors (14) in order to connect the individual insulation piercing connectors (14) to the individual strands of the connector cable in an electrically conductive manner,
wherein the socket contacts (12) comprise signal-transmitting socket contacts (16) and energy-transmitting socket contacts (18), and the stranded wire contacts (14) comprise signal-transmitting stranded wire contacts (20) and energy-transmitting stranded wire contacts (22), and
wherein each signal-transmitting socket contact (16) is electro-conductively connected to an assigned signal-transmitting stranded wire contact (20) by means of the printed circuit board (10),
**characterized in that** the housing (40) further has a stranded wire receiving element guide (40), wherein the stranded wire receiving elements (26) are configured such that in the event of being pulled over or placed they are guided along guiding grooves of the stranded wire receiving element guide (40), wherein projections or rails are formed on lateral surfaces of the stranded wire receiving elements (26) which can be inserted into the guiding grooves on inner lateral surfaces of the stranded wire receiving element guide (40).

2. The connector (2) according to claim 1, wherein every energy transmitting socket contact (18) is electro-conductively connected to an assigned energy-transmitting stranded wire contact (22) by means of a connection conductor (24), wherein each connection conductor (24) is arranged on a surface of the printed circuit board (10).

3. The connector (2) according to claim 1 or 2, wherein all stranded wire contacts (14) or a sub-set of the stranded wire contacts (14) are arranged on a side of the printed circuit board (10) upon which no traces are formed.

4. The connector (2) according to any one of the preceding claims, wherein the bottom of the printed circuit board (10) has eight signal-transmitting socket contacts (16) and/or the top of the printed circuit board (10) has two energy-transmitting contacts (16).

5. The connector (2) according to any one of the preceding claims, wherein the energy-transmitting socket contacts (18) are arranged externally in the direction of the transverse axis (BA) of the printed circuit board (10) relative to the signal-transmitting socket contacts (16).

6. The connector (2) according to any one of the preceding claims, wherein five stranded wire contacts (14) are arranged on the bottom of the printed circuit board (10), and five stranded wire contacts (14) are arranged on the top of the printed circuit board (10).

7. The connector (2) according to any one of the preceding claims,
wherein the traces of the printed circuit board (10) are essentially arranged not parallel to one another in order to minimize mutual interference.

8. A system comprising a connector (2) and a socket, comprising:
a connector (2) according to any one of the preceding claims, and
a socket,
wherein the socket has a housing (4) with a connector receiving recess and a plurality of contact elements is arranged in the connector receiving recess, wherein the contact elements comprise signal-transmitting contact elements and energy-transmitting contact elements, and
wherein in the plugged-in state every signal-transmitting socket element (16) of the connector (2) is electro-conductively connected to an assigned signal-transmitting contact element of the socket, and every energy-transmitting socket contact (18) of the connector (2) is electro-conductively connected to an assigned energy-transmitting contact element of the socket.

## Revendications

1. Prise (2), en particulier une prise RJ45 (2), comportant :
- un boîtier (4) présentant une région d'extrémité côté douille (6) et une région d'extrémité côté câble (8),
- une carte de circuit imprimé (10) disposée dans le boîtier (4), où
-- la carte de circuit imprimé (10) présente une pluralité de contacts de douille (12) dans sa région d'extrémité côté douille (6) pour un contact électriquement conducteur avec des éléments de contact d'une douille, et dans laquelle
-- la carte de circuit imprimé (10) présente une pluralité de contacts de brins (14) dans sa région d'extrémité côté câble (8), lesquels sont conçus comme des connecteurs rapides (14) et lesquels peuvent être reliés à des brins individuels d'au moins un câble de liaison (46), en particulier un câble réseau, et
- des éléments de réception de brin (26), les éléments de réception de brin (26) étant disposés dans le boîtier (4) et présentant des ouvertures de réception de brin (28), des brins individuels du câble de liaison (46) pouvant être introduits dans les ouvertures de réception de brin (28), et les éléments de réception de brin (26) pouvant être enfoncés sur les connecteurs rapides (14) sur la carte de circuit imprimé (10), afin de relier les différents connecteurs rapides (14) aux différents brins du câble de liaison de façon électriquement conductrice,
dans laquelle les contacts de douille (12) comportent des contacts de douille transmetteurs de signaux (16) et des contacts de douille transmetteurs d'énergie (18), et les contacts de douille (14) comportent des contacts de brins transmetteurs de signaux (20) et des contacts de brins transmetteurs d'énergie (22), et
dans laquelle chaque contact de douille transmetteur de signaux (16) est relié de façon électriquement conductrice à un contact de brin transmetteur de signaux (20) correspondant au moyen de la carte de circuit imprimé (10),
**caractérisée en ce que** le boîtier (4) présente en outre une pièce de guidage d'éléments de réception de brin (40), les éléments de réception de brin (26) étant configurés de manière à être guidés le long de rainures de guidage de la pièce de guidage d'éléments de réception de brin (40) lors de l'enfoncement ou du montage, des saillies ou rails étant formés sur des surfaces latérales des éléments de réception de brin (26), ceux-ci pouvant être introduits dans les rainures de guidage sur les surfaces latérales intérieures de la pièce de guidage d'éléments de réception de brin (40).

2. Prise (2) selon la revendication 1, dans laquelle chaque contact de douille transmetteur d'énergie (18) est relié de façon électriquement conductrice à un contact de brin transmetteur d'énergie (22) correspondant au moyen d'un conducteur de liaison (24), chaque conducteur de liaison (24) étant disposé sur une surface de la carte de circuit imprimé (10).

3. Prise (2) selon la revendication 1 ou 2, dans laquelle tous les contacts de brins (14) ou une quantité partielle des contacts de brins (14) sont disposés sur un côté de la carte de circuit imprimé sur lequel aucune piste conductrice n'est formée.

4. Prise (2) selon l'une des revendications précédentes, dans laquelle la face inférieure de la carte de circuit imprimé (10) présente huit contacts de douille transmetteurs de signaux (16) et/ou la face supérieure de la carte de circuit imprimé (10) présente deux contacts de douille transmetteurs d'énergie (18).

5. Prise (2) selon l'une des revendications précédentes, dans laquelle les contacts de douille transmetteurs d'énergie (18) sont disposés à l'extérieur par rapport aux contacts de douille transmetteurs de signaux (16) dans la direction de l'axe de largeur (BA) de la carte de circuit imprimé (10).

6. Prise (2) selon l'une des revendications précédentes, dans laquelle cinq contacts de brins (14) sont disposés sur la face inférieure de la carte de circuit imprimé (10) et cinq contacts de brins (14) sont disposés sur la face supérieure de la carte de circuit imprimé (10).

7. Prise (2) selon l'une des revendications précédentes,
dans laquelle les pistes conductrices de la carte de circuit imprimé (10) sont conçues essentiellement non parallèles les unes aux autres, afin de minimiser les effets parasites réciproques.

8. Système composé d'une prise (2) et d'une douille, comportant :
une prise (2) selon l'une des revendications précédentes, et
une douille,
dans lequel la douille présente un boîtier (4) avec un renfoncement de réception de prise et une pluralité d'éléments de contact sont disposés dans le renfoncement de réception de prise, les éléments de contact comportant des éléments de contact transmetteurs de signaux et des éléments de contact transmetteurs d'énergie, et
dans lequel, dans l'état enfiché, chaque contact de douille transmetteur de signaux (16) de la prise (2) est relié de façon électriquement conductrice à un élément de contact transmetteur de signaux correspondant de la douille, et chaque contact de douille transmetteur d'énergie (18) de la prise (2) est relié de façon électriquement conductrice à un élément de contact transmetteur d'énergie correspondant de la douille.
